# EUROPÄISCHE PATENTSCHRIFT

(11) **EP 2 636 113 B1**
(45) Veröffentlichungstag und Bekanntmachung des Hinweises auf die Patenterteilung: **02.08.2017**
(21) Anmeldenummer: 11807880.7
(22) Anmeldetag: 09.12.2011
(51) Int. Cl.: H02G 15/105, H02G 15/24, H01F 27/36

(54) **ELEKTRISCHE ABSCHIRMANORDNUNG EINER TRENNSTELLE EINER LEITUNGSFÜHRUNG FÜR EINE HGÜ-KOMPONENTE**
ELECTRICAL SHIELDINGG ARRANGEMENT FOR AN INTERFACE OF A LINE FOR A HVDC TRANSMISSION COMPONENT
SYSTÈME DE BLINDAGE ÉLECTRIQUE POUR UNE INTERFACE D'UNE LIGNE POUR TRANSMISSION D'ÉLECTRICITÉ EN COURANT CONTINU À HAUTE TENSION

(30) Priorität: 22.12.2010 DE 102010063979
(43) Veröffentlichungstag der Anmeldung: 11.09.2013
(73) Patentinhaber: Siemens Aktiengesellschaft, 80333 München (DE)
(72) Erfinder: HOPPE, Jens, 90592 Schwarzenbruck (DE); SCHLAGER, Johann, 90475 Nürnberg (DE); HEINZIG, Peter, CH-8640 Rapperswil (CH)
(86) Internationale Anmeldenummer: PCT/EP2011/072327
(87) Internationale Veröffentlichungsnummer: WO 2012/084553

(56) Entgegenhaltungen:
- WO-A1-2007/107492
- DE-B4-102006 008 922
- DE-C- 890 073
- US-B1- 6 433 271

## Beschreibung

Die Erfindung betrifft eine elektrische Abschirmanordnung einer Trennstelle einer Leitungsführung für eine HGÜ-Komponente, insbesondere einen HGÜ-Transformator oder eine HGÜ-Drossel, wobei die Leitungsführung an der Trennstelle durch zwei Rohrelektroden gebildet ist.

Die elektrische Verbindung von elektrischen Anlagen, insbesondere Hochspannungsanlagen, erfordert einen hohen technischen Aufwand für die elektrische Abschirmung der zu- und abführenden Hochspannungsleitungen. Insbesondere bei Ausleitungen zu elektrischen Anlagen muss eine elektrische Abschirmung jederzeit und über die gesamte Leitungsführung gegeben sein. Insbesondere in Fällen, in denen die elektrische Anlage ein ölgefüllter Transformator beziehungsweise eine Drossel für hohe Betriebsspannungen ist, ist die Leitungsführung in einem geerdeten und Öl enthaltenden Dom der entsprechenden elektrischen Anlage angeordnet.

Vor allem für hohe Gleichspannungen, wie sie bei Hochspannungsgleichstromübertragungen (HGÜ) beispielsweise bei der Gleichspannungsprüfung auftreten, ist eine elektrische Abschirmung der Leitungsführung unerlässlich.

Beispielsweise muss in einem HGÜ Transformator die die Wicklungen verbindende Hochspannungsleitung über die gesamte Länge zwischen den Ausleitungen aus den Wicklungen elektrisch abgeschirmt werden. Eine solche Abschirmung besteht meist aus einer rohrförmigen Elektrode (Rohrelektrode) und eine diese umgebendes Barrierensystem aus einzelnen ineinander verschachtelten Barrieren. Die innerhalb dieser Abschirmung vorhandenen Hohlräume sind zur besseren Isolation mit einer Isolierflüssigkeit, meist einem Öl, gefüllt. Zur leichteren Montage besteht diese Abschirmung meist aus zwei Teilstücken, die auf der Wicklungsseite in die Ausleitungen der Wicklungen münden, und an einer dazwischen liegenden Trennstelle miteinander verbunden werden.

Derzeit sind Abschirmanordnungen bekannt, bei denen zwei Teilstücke bestehend jeweils aus einer Rohrelektrode und einem diese umgebendes System aus Barrieren unterschiedliche Durchmesser aufweisen, und so ineinander verschiebbar sind. Die Barrieren weisen oft Zusatzelemente zur Arretierung oder Verkeilung auf. Durch die veränderten Durchmesser in Verbindung mit den Zusatzelementen der Barrieren wird eine Verkeilung der ineinander geschobenen Teilstücke erreicht. Problematisch daran ist, dass eine Arretierung der Teilstücke nur in genau einer Position oder in einem stark eingeschränkten Bereich erfolgt, so dass die Teilstücke genau aufeinander abgestimmt sein müssen. Ein Ausgleich von Toleranzen axialer Längen ist daher mit Aufwand verbunden.

So beschreibt die DE 690 24 335 T2 eine Buchse für hohe Gleichspannungen. Gemäß der dortigen Erfindung wird mittels eines um die Trennstelle angeordneten Kondensatorkörpers eine kapazitive Steuerung des elektrischen Feldes erreicht. Dabei ist in Abhängigkeit der ineinander angeordneten Radien des Kondensatorkörpers eine Lage in axialer Richtung bezogen auf die Leitungsdurchführung definiert, die als eine Art nach außen gerichteter Kegelstumpf ausgebildet ist.

Des Weiteren offenbart die EP 0 169 922 B1 ein Isolierelement für Hochspannungsgeräte. Gemäß der dortigen Beschreibung wird ein Isolierzylinder in einem Überlappungsbereich bezüglich seiner Wandstärke verringert und angeschrägt, so dass ein hierzu korrespondierender Isolierzylinder im Überlappungsbereich mit entsprechender Verringerung der Wandstärke und Anschrägung im Überlappungsbereich benutzt wird.

Des Weiteren offenbart die EP 1 487 074 A1 einen Hüllkörper für ein Hochspannungskabel, wobei der Hüllkörper aus mindestens zwei Teilkörpern besteht, die ineinander steckbar sind und Feldsteuerteilelemente beziehungsweise Isolationselemente aufweisen, wobei nach dem Zusammenstecken der Teilkörper diese den formschlüssigen Hüllkörper bilden.

Weiterhin offenbart die DE 10 2006 008 922 B4 eine Abschirmanordnung, bei der zwei korrespondierende Kopplungselemente mit jeweils einer rohrförmigen Steuerelektrode und einer diese Steuerelektrode umhüllenden Barriere so ineinander verschoben werden können, dass sie sich dabei mechanisch verspannen. Die DE890073 offenbart eine Abschirmanordnung mit einer Trennstelle zwischen zwei Rohrelektroden, die von einem Barrieresystem umgeben sind. Erforderlich bei allen Lösungen im Stand der Technik ist, dass eine mechanische Verspannung der Barrieren ineinander kein oder nur geringe Toleranzen bezüglich des Arretierungspunktes der Teilstücke gegeneinander zulassen und die Teilstücke geometrisch komplex geformt sind und ihre Herstellung somit aufwändig ist.

Aufgabe der vorliegenden Erfindung ist es daher, eine elektrische Abschirmanordnung bereitzustellen, die schnell und einfach herstellbar ist, sowie eine einfache Montage ermöglicht.

Gelöst wird die Aufgabe durch die Merkmale des Patentanspruchs 1. Erfindungsgemäß ist vorgesehen, dass ein inneres Rohr im Inneren zweier äußerer Rohrelektroden derart angeordnet ist, dass dieses innere Rohr einen die Trennstelle bildenden Spalt zwischen den äußeren Rohrelektroden überbrückt. Das innere Rohr kann aus einem isolierenden Material beispielsweise einem Cellulosematerial wie Pressspan oder aus einem leitfähigen Material zum Beispiel einem Metall gefertigt sein.

Durch dieses innere Rohr werden die elektrischen Felder über die Trennstelle geführt. Dadurch ergeben sich geringere maximale Gleichspannungsfeldstärken als im bekannten Stand der Technik. Die im Wesentlichen rohrförmige Geometrie der beiden äußeren Rohrelektroden und des inneren Rohres gewährleistet eine einfache und kostengünstige Herstellbarkeit. Außerdem kann vorteilhaft eine große Toleranz bezüglich der zu verbindenden Teilstücke relativ zueinander gewährleistet werden, da auch größere Spalte durch das innere Rohr überbrückt werden können.

Rohrförmig im Sinne der Erfindung bedeutet, dass die so benannten Elemente eine Längserstreckung in axialer Richtung aufweisen und vorzugsweise einen nahezu kreisringförmigen Querschnitt besitzen. Hierbei muss das jeweils so benannte Element jedoch nicht vollständig als eine Art Rohr ausgebildet sein, sondern kann auch segmentweise Aussparungen und Teilöffnungen aufweisen. Natürlich sind auch hiervon abweichende Querschnitte, wie z. B. elliptische, dreieckige oder mehreckige Strukturen möglich.

Eine Rohrelektrode im Sinne der Erfindung ist eine rohrförmige Elektrode, wobei das Merkmal "Elektrode" auf ein aus einem elektrisch leitfähigen Material bestehendes Bauteil hinweist. Im Zusammenhang mit HGÜ-Transformatoren, wie in der hier vorliegenden Erfindung, werden Rohrelektroden meist aus Kupfer gefertigt.

In einer vorteilhaften Ausgestaltung der Erfindung ist das innere Rohr als Rohrelektrode ausgeführt. Das innere Rohr ist damit aus einem elektrisch leitfähigen Material hergestellt. Damit ist vorteilhaft eine sichere Feldführung über die Trennstelle und eine bessere Abschirmung gegeben.

In einer weiteren vorteilhaften Ausgestaltung sind die äußeren Rohrelektroden mit gleichem Durchmesser ausgeführt. So können die gleichen Rohmaterialien für beide äußeren Rohrelektroden verwendet werden, was den Fertigungsaufwand verringert. Selbstverständlich können die äußeren Rohrelektroden auch mit unterschiedlichem Durchmesser ausgeführt sein, falls sich dadurch verbesserte Abschirmungseigenschaften erreichen lassen.

Vorteilhaft ist eine der äußeren Rohrelektroden gegenüber der anderen äußeren Rohrelektrode und dem inneren Rohr verschiebbar. Dadurch kann leicht ein Toleranzausgleich und eine axiale Längenanpassung vorgenommen werden. Die mögliche Größe der Längenanpassung kann durch die Länge des inneren Rohres mitbestimmt werden.

Weiterhin ist es vorteilhaft, das innere Rohr an einer der äußeren Rohrelektroden zu befestigen. Eine Befestigung kann beispielsweise mittels Verkleben oder Verschrauben vorgenommen werden. Dadurch ist sichergestellt, dass sich das innere Rohr beim Verschieben der anderen äußeren Rohrelektrode nicht mit verschieben kann und eine Überbrückung des Spaltes zwischen den äußeren Rohrelektroden sicher gewährleistet ist.

In einer weiteren vorteilhaften Ausgestaltung sind die beiden äußeren Rohrelektroden zumindest auf der Außenseite mit einer Isolationsschicht versehen. Diese Isolationsschicht sorgt durch eine Homogenisierung der elektrischen Feldverläufe entlang der äußeren Rohrelektroden für verbesserte Abschirmeigenschaften.

Es ist auch aus den genannten Gründen vorteilhaft, das innere Rohr zumindest auf der Außenseite mit einer Isolationsschicht zu versehen, wenn das innere Rohr als Rohrelektrode ausgeführt ist.

Sowohl im Fall der äußeren Rohrelektroden, wie auch im Fall des inneren Rohres sorgt diese Isolationsschicht durch eine Homogenisierung der elektrischen Feldverläufe für verbesserte Abschirmeigenschaften.

Vorteilhaft ist dabei ebenfalls, dass die äußeren Rohrelektroden im Bereich der Trennstelle einen verringerten Isolationsauftrag gegenüber Bereichen außerhalb der Trennstelle benötigen. Hierdurch wird erreicht, dass ein geringeres Gleichspannungsfeld in der Isolationsschicht, z. B. im Papier des Trennstellenbereiches auftritt und die zulässigen elektrischen Auslegungsparameter eingehalten werden.

Vorteilhaft ist diese Isolationsschicht der äußeren Rohrelektroden beziehungsweise des inneren Rohres aus einem Cellulosematerial, insbesondere als Papierisolation ausgeführt. Eine Papierisolation hat für den verwendeten Zweck in einem HGÜ-Transformator besonders günstige Isolationseigenschaften und kann leicht durch die Anzahl der verwendeten Papierlagen an die elektrischen Auslegungsparameter angepasst werden. Gemäß der Erfindung ist um die äußeren Rohrelektroden jeweils ein Barrierensystem aus einzelnen Barrieren angeordnet. Diese Barrieren können beispielsweise aus Pressspan gefertigt sein. Diese Barrieren sind konzentrisch um die äußeren Rohrelektroden herum angeordnet. Die innerste dieser Barrieren ist jeweils an der entsprechenden äußeren Rohrelektrode beispielsweise durch Verkleben befestigt. Die weiter außen liegenden Barrieren sind an der nächsten weiter innen liegenden Barriere entweder direkt oder mit Hilfe von Abstandhaltern wie beispielsweise Leisten befestigt. Das Barrierensystem erstreckt sich entlang der gesamten Länge der entsprechenden äußeren Rohrelektrode. Im Bereich der Trennstelle kann allerdings das Barrierensystem der einen äußeren Rohrelektrode kürzer, das der anderen äußeren Rohrelektrode länger als die entsprechende Rohrelektrode ausgeführt sein, so dass der Spalt zwischen den einzelnen Barrieren nicht mit dem Spalt zwischen den äußeren Rohrelektroden überlappt. Dieses Barrierensystem gewährleistet eine verbesserte Isolationsfestigkeit.

Weiterhin ist es vorteilhaft, dass im Bereich der Trennstelle weitere Barrieren außerhalb der äußeren Rohrelektroden angebracht sind, wobei diese weiteren Barrieren sich im Bereich der Trennstelle mit dem Barrierensystem der äußeren Rohrelektroden überlappen. Im Gegensatz zu den Barrierensystemen der Rohrelektroden, die sich über die Länge der Rohrelektroden erstrecken, erstrecken sich die weiteren Barrieren über den Bereich der Trennstelle nur soweit hinaus, dass eine Überlappung der Barrierensysteme der äußeren Rohrelektroden und der weiteren Barrieren auch im Bereich der Verschiebbarkeit der äußeren Rohrelektroden gegeben ist. Diese weiteren Barrieren überbrücken die Trennstelle außerhalb der äußeren Rohrelektroden und sorgen vorteilhaft für eine gleichmäßige Feldführung im Bereich der Spalte zwischen den äußeren Rohrelektroden und der Spalte zwischen den Barrierensystemen der äußeren Rohrelektroden.

Eine beispielhafte Ausgestaltung wird anhand der Figuren erläutert. Es zeigen:
- Fig. 1: ein schematisches Schnittbild einer erfindungsgemäßen elektrischen Abschirmanordnung im Bereich einer Trennstelle;
- Fig. 2: eine schematische Ansicht einer erfindungsgemäßen elektrischen Abschirmungsanordnung der Trennstelle gemäß Figur 1 zwischen zwei Wicklungen.

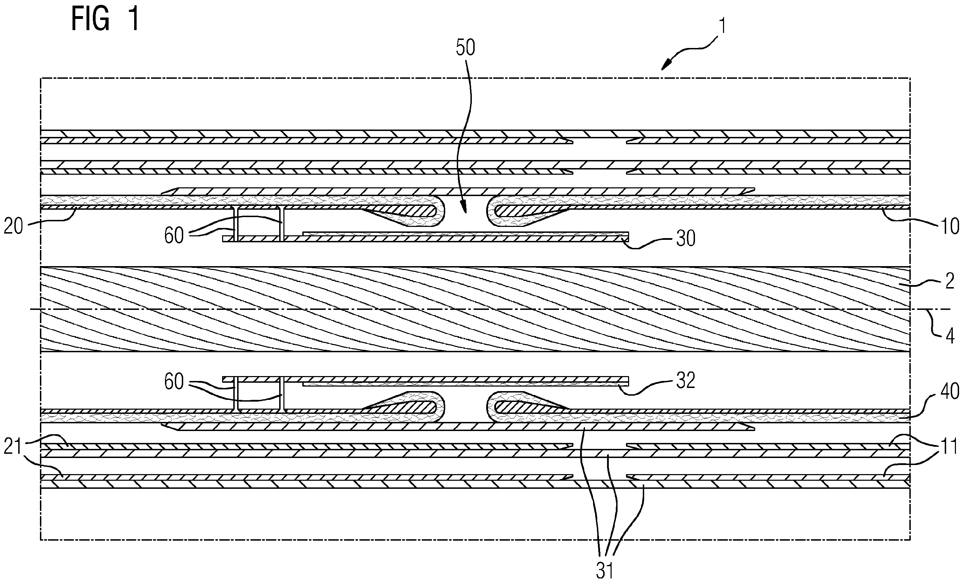

Die Figur 1 zeigt einen Ausschnitt einer erfindungsgemäßen Abschirmanordnung im Bereich einer Trennstelle 1 im fertig montierten Zustand. Eine stromführende Leitung 2 befindet sich in der Mitte einer rotationssymmetrischen Anordnung um die Rotationsachse 4, die hier gestrichelt dargestellt ist.

Diese stromführende Leitung 2 stellt eine elektrische Verbindung zwischen zwei Wicklungen eines Transformators dar (hier nicht dargestellt) und kann zum Beispiel aus Kupferseilen bestehen, die meist mit einem Baumwollband zur Isolation umwickelt sind. Zwei um die stromführenden Leitung 2 konzentrisch angeordnete äußere Rohrelektroden 10, 20 umgeben die stromführende Leitung 2 auf der rechten bzw. linken Seite einer Trennstelle. Zwischen den beiden äußeren Rohrelektroden 10, 20 befindet sich im Bereich der Trennstelle ein axialer Spalt 50. Die Enden der äußeren Rohrelektroden 10, 20 sind verdickt um eine Feldlinienkonzentration an dieser Stelle zu vermeiden. Auf den Außenseiten der äußeren Rohrelektroden 10, 20 befindet sich eine Isolationsschicht 40, beispielsweise aus Papier. Am verdickten Ende der äußeren Rohrelektroden 10, 20 ist diese Isolationsschicht 40 um das Ende herum auf die Innenseite geführt. Ein inneres Rohr 30 befindet sich zwischen den beiden äußeren Rohrelektroden 10, 20 und der stromführenden Leitung 2, so dass der Spalt 50 überbrückt wird. Im gezeigten Ausführungsbeispiel ist das innere Rohr 30 als Rohrelektrode ausgeführt und trägt auf der Außenseite teilweise eine Papierisolation 32. Die Länge des inneren Rohres 30 sollte mindestens das Dreifache der Breite des durch die beiden äußeren Rohrelektroden 10, 20 gebildeten Spaltes 50 betragen. Das innere Rohr 30 ist an einer der äußeren Rohrelektroden 20 mittels vier Schrauben 60 in einem nicht mit der Isolationsschicht bedeckten Teil fest verschraubt. Andere alternative Befestigungsarten sind möglich, beispielsweise Verkleben.

Die beiden äußeren Rohrelektroden 10, 20 sind außen jeweils mit einem eigenen Barrierensystem umgeben. Bei der rechten der äußeren Rohrelektroden 10 wird das Barrierensystem aus den Barrieren 11 gebildet. Im Fall der linken äußeren Rohrelektrode 20 besteht das Barrierensystem aus den Barrieren 21. Im dargestellten Ausführungsbeispiel sind die Barrierensysteme aus jeweils zwei Barrieren gebildet, es können aber auch deutlich mehr Barrieren sein. Die Barrieren 11, 21 sind (zum Beispiel mit hier nicht dargestellten) Leisten oder Abstandhaltern untereinander und mit der zugehörigen äußeren Rohrelektrode 10, 20 fest verbunden. Die beiden Barrierensysteme 11, 21 sind so an den äußeren Rohrelektroden 10, 20 angeordnet, dass der durch sie gebildete Spalt nicht mit dem durch die beiden äußeren Rohrelektroden 10 20 gebildeten Spalt 50 überlappt. Die Barrierensysteme 11, 21 erstrecken sich außerhalb des hier dargestellten Ausschnitts jeweils entlang ihrer zugehörigen äußeren Rohrelektrode bis zum Kaminsystem der Wicklung.

Im Bereich der Trennstelle befinden sich außerdem konzentrisch angeordnete weitere Barrieren 31. Im dargestellten Ausführungsbeispiel sind drei weitere Barrieren 31 gezeigt. Diese weiteren Barrieren überlappen im Bereich der Trennstelle die beiden äußeren Rohrelektroden 10, 20, sowie die dazugehörigen Barrierensysteme 11, 21 in axialer Richtung. Der Überlappungsbereich der einzelnen weiteren Barrieren 31 mit den äußeren Rohrelektroden kann unterschiedlich groß sein. Die weiteren Barrieren 31 sind an einer der äußeren Rohrelektroden bzw. an den dazugehörigen Barrieren 11 befestigt, zum Beispiel durch Verklebung oder Bandagen.

Die weiteren Barrieren 31 homogenisieren den Feldverlauf im Bereich des Spaltes der äußeren Rohrelektroden 10, 20 und im Bereich der Spalt der das Barrierensysteme bildenden Barrieren 31.

Zur Montage wird das rechte Teilstück der Trennstelle bestehend aus der rechten äußeren Rohrelektrode 10 und den daran befestigten Barrieren 11 in das linke Teilstück bestehend aus der linken Rohrelektrode 20, den daran befestigten, dazugehörigen Barrieren 21, dem an der Rohrelektrode 20 befestigten inneren Rohr 30 und den an der Rohrelektrode 20 und den Barrieren 21 befestigten weiteren Barrieren 31 hineingeschoben.

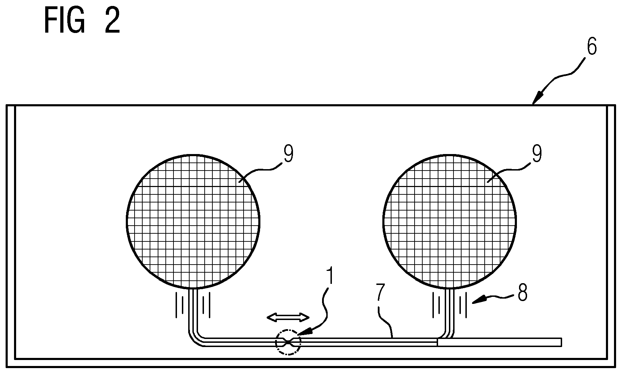

Die Figur 2 zeigt einen Transformator 6 mit zwei vereinfacht dargestellten Wicklungen 9. Eine Hochspannungsleitung mit Abschirmung 7 verbindet die beiden Wicklungen 9. Die Ausleitung der Hochspannungsleitung 7 aus den Wicklungen 9 erfolgt über abschirmende Kaminsysteme 8. An einer Stelle zwischen den Wicklungen 9 befindet sich die erfindungsgemäße elektrische Abschirmungsanordnung 1 einer Trennstelle. Durch die Möglichkeit der Verschiebbarkeit der Abschirmanordnung ist eine Kompensation axialer Über- bzw. Unterlängen der Leitungen 7 gegeben.

## Patentansprüche

1. Elektrische Abschirmanordnung (1) einer Trennstelle einer Leitungsführung für einen HGÜ-Transformator oder eine HGÜ-Drossel, wobei die Leitungsführung an der Trennstelle durch zwei Rohrelektroden gebildet ist, wobei die Rohrelektroden als äußere Rohrelektrode (10, 20) zu beiden Seiten der Trennstelle angeordnet sind, und ein inneres Rohr (30) im Inneren der beiden äußeren Rohrelektroden (10, 20) derart angeordnet ist, dass dieses einen die Trennstelle bildenden axialen Spalt (50) zwischen den äußeren Rohrelektroden (10, 20) überbrückt, wobei konzentrisch um die äußeren Rohrelektroden (10, 20) jeweils entlang der gesamten Länge der entsprechenden äußeren Rohrelektrode (10, 20) ein Barrierensystem aus einzelnen Barrieren (11, 21) angeordnet ist,
**dadurch gekennzeichnet, dass** im Bereich der Trennstelle das Barrierensystem der einen äußeren Rohrelektrode (10, 20) kürzer, das der anderen äußeren Rohrelektrode (10, 20) länger als die entsprechende Rohrelektrode ausgeführt ist, so dass ein durch die Barrieren (11, 21) gebildeter axialer Spalt nicht mit dem axialen Spalt (50) der Trennstelle überlappt.

2. Abschirmanordnung nach Anspruch 1,
**dadurch gekennzeichnet, dass** das innere Rohr(30) als Rohrelektrode ausgebildet ist.

3. Abschirmanordnung nach Anspruch 1 oder 2,
**dadurch gekennzeichnet, dass** die äußeren Rohrelektroden (10, 20) gleichen Durchmesser aufweisen.

4. Abschirmanordnung nach Anspruch 1 - 3,
**dadurch gekennzeichnet, dass** eine der äußeren Rohrelektroden (10, 20) gegenüber der anderen äußeren Rohrelektrode (10 oder 20) und gegenüber dem inneren Rohr (30) in axialer Richtung verschiebbar ist.

5. Abschirmanordnung nach einem der Ansprüche 1-4,
**dadurch gekennzeichnet, dass** das innere Rohr (30) an einer der äußeren Rohrelektroden (10, 20) fixiert ist.

6. Abschirmanordnung nach einem der Ansprüche 1-5,
**dadurch gekennzeichnet, dass** die beiden äußeren Rohrelektroden (10, 20) eine Isolationsschicht (40) zumindest auf der Außenseite aufweisen.

7. Abschirmanordnung nach Anspruch 6,
**dadurch gekennzeichnet, dass** die Isolationsschicht (40) im Bereich der Trennstelle eine verringerte Dicke gegenüber Bereichen außerhalb der Trennstelle aufweist.

8. Abschirmanordnung nach Anspruch 6 oder 7,
**dadurch gekennzeichnet, dass** die Isolationsschicht (40) aus einem Cellulosematerial besteht, insbesondere eine Papierisolation ist.

9. Abschirmanordnung nach Anspruch 1-8,
**dadurch gekennzeichnet, dass** das innere Rohr (30) zumindest auf der Außenseite eine Isolationsschicht (32) aufweist.

10. Abschirmanordnung nach Anspruch 9,
**dadurch gekennzeichnet, dass** die Isolationsschicht (32) aus einem Cellulosematerial besteht, insbesondere eine Papierisolation ist.

11. Abschirmanordnung nach einem der Ansprüche 1 bis 10,
**dadurch gekennzeichnet, dass** im Bereich der Trennstelle weitere Barrieren (31) außerhalb der äußeren Rohrelektroden (10, 20) angebracht sind, wobei diese weiteren Barrieren (31) sich im Bereich der Trennstelle mit dem Barrierensystem (11, 21) der äußeren Rohrelektroden (10, 20) überlappen.

## Claims

1. Electrical shielding arrangement (1) for a disconnection point in wiring for an HVDC transformer or an HVDC inductor, wherein the wiring is formed at the disconnection point by two tubular electrodes, wherein the tubular electrodes are arranged as outer tubular electrode (10, 20) on both sides of the disconnection point, and an inner tube (30) is arranged in the interior of the two outer tubular electrodes (10, 20) in such a way that it bridges an axial gap (50) forming the disconnection point between the outer tubular electrodes (10, 20), wherein a barrier system comprising individual barriers (11, 21) is arranged concentrically around each of the outer tubular electrodes (10, 20) along the entire length of the corresponding outer tubular electrode (10, 20), **characterized in that**, in the region of the disconnection point, the barrier system of the one outer tubular electrode (10, 20) is shorter, and that of the other outer tubular electrode (10, 20) is longer, than the corresponding tubular electrode, with the result that an axial gap formed by the barriers (11, 21) does not overlap with the axial gap (50) of the disconnection point.

2. Shielding arrangement according to Claim 1,
**characterized in that**
the inner tube (30) is in the form of a tubular electrode.

3. Shielding arrangement according to Claim 1 or 2,
**characterized in that**
the outer tubular electrodes (10, 20) have the same diameter.

4. Shielding arrangement according to Claims 1-3,
**characterized in that**
one of the outer tubular electrodes (10, 20) is movable in the axial direction with respect to the other outer tubular electrode (10 or 20) and with respect to the inner tube (30).

5. Shielding arrangement according to one of Claims 1-4,
**characterized in that**
the inner tube (30) is fixed on one of the outer tubular electrodes (10, 20).

6. Shielding arrangement according to one of Claims 1-5,
**characterized in that**
the two outer tubular electrodes (10, 20) have an insulating layer (40) at least on the outer side.

7. Shielding arrangement according to Claim 6,
**characterized in that**
the insulating layer (40) in the region of the disconnection point has a reduced thickness in comparison with the regions outside the disconnection point.

8. Shielding arrangement according to Claim 6 or 7,
**characterized in that**
the insulating layer (40) consists of a cellulose material, in particular is paper insulation.

9. Shielding arrangement according to Claims 1-8,
**characterized in that**
the inner tube (30) has an insulating layer (32) at least on the outer side.

10. The shielding arrangement according to Claim 9,
**characterized in that**
the insulating layer (32) consists of a cellulose material, in particular is paper insulation.

11. Shielding arrangement according to one of Claims 1 to 10,
**characterized in that**
further barriers (31) are fitted outside the outer tubular electrodes (10, 20) in the region of the disconnection point, wherein these further barriers (31) overlap in the region of the disconnection point with the barrier system (11, 21) of the outer tubular electrodes (10, 20).

## Revendications

1. Agencement (1) de blindage électrique d'une interface d'une ligne d'un transformateur en courant continu à haute tension ou d'une bobine à courant continu à haute tension, la ligne étant formée à l'interface par deux électrodes tubulaires, les électrodes tubulaires étant disposées sous la forme d'électrodes (10, 20) tubulaires extérieures de part et d'autre de l'interface et un tube (30) intérieur étant disposé à l'intérieur des deux électrodes (10, 20) tubulaires extérieures, de manière à recouvrir, entre les électrodes (10, 20) tubulaires extérieures, un intervalle (50) axial formant l'interface,
dans lequel il est monté, concentriquement autour des électrodes (10, 20) tubulaires extérieures, respectivement le long de toute la longueur de l'électrode (10, 20) tubulaire extérieure correspondante, un système de barrière composé de barrières (11, 21) individuelles,
**caractérisé en ce que**, dans la région de l'interface, le système de barrière de l'une des électrodes (10, 20) tubulaires extérieures est plus court, **en ce que** l'autre électrode (10, 20) tubulaire extérieure est plus longue que l'électrode (10) tubulaire correspondante, de sorte qu'un intervalle axial, formé par les barrières (11, 21), n'est pas à chevauchement avec l'intervalle (50) axial de l'interface.

2. Agencement de blindage suivant la revendication 1,
caractérisé en que le tube (30) intérieur est constitué sous la forme d'une électrode tubulaire.

3. Agencement de blindage suivant la revendication 1 ou 2,
**caractérisé en ce que** les électrodes (10, 20) tubulaires extérieures ont le même diamètre.

4. Agencement de blindage suivant l'une des revendications 1 à 3,
**caractérisé en ce que** l'une des électrodes (10, 20) tubulaires extérieures peut, par rapport à l'autre électrode (10 ou 20) tubulaire extérieure et par rapport au tube (30) intérieur, être décalée dans la direction axiale.

5. Agencement de blindage suivant l'une des revendications 1 à 4,
**caractérisé en ce que** le tube (30) intérieur est immobilisé sur l'une des électrodes (10, 20) tubulaires extérieures.

6. Agencement de blindage suivant l'une des revendications 1 à 5,
**caractérisé en ce que** les deux électrodes (10, 20) tubulaires extérieures ont une couche (40) isolante au moins du côté extérieur.

7. Agencement de blindage suivant la revendication 6,
**caractérisé en ce que** la couche (40) isolante a, dans la région de l'interface, une épaisseur diminuée par rapport à des régions en dehors de l'interface.

8. Agencement de blindage suivant la revendication 6 ou 7,
**caractérisé en ce que** la couche (40) isolante est en matière cellulosique, en étant notamment une isolation en papier.

9. Agencement de blindage suivant l'une des revendications 1 à 8,
**caractérisé en ce que** le tube (30) intérieur a une couche (32) isolante au moins du côté extérieur.

10. Agencement de blindage suivant la revendication 9,
**caractérisé en ce que** la couche (32) isolante est en une matière cellulosique, en étant notamment une isolation en papier.

11. Agencement de blindage suivant l'une des revendications 1 à 10,
**caractérisé en ce que**, dans la région de l'interface, d'autres barrières (31) sont mises à l'extérieur des électrodes (10, 20) tubulaires extérieures, ces autres barrières (31) se chevauchant, dans la région de l'interface, avec le système (11, 21) de barrière des électrodes (10, 20) tubulaires extérieures.
